(19) Europäisches Patentamt / European Patent Office / Office européen des brevets

(11) **EP 3 385 110 B1**

(12) **EUROPÄISCHE PATENTSCHRIFT**

(45) Veröffentlichungstag und Bekanntmachung des Hinweises auf die Patenterteilung:
**05.10.2022** **Patentblatt 2022/40**

(21) Anmeldenummer: **18161643.4**

(22) Anmeldetag: **14.03.2018**

(51) Internationale Patentklassifikation (IPC):
**B60L 13/08** *(2006.01)*  **B60L 13/03** *(2006.01)*
**B65G 54/02** *(2006.01)*  **H02P 6/00** *(2016.01)*

(52) Gemeinsame Patentklassifikation (CPC):
**B60L 13/03; B60L 13/08; B65G 54/02;** H02P 6/006

(54) **VERFAHREN ZUR REGELUNG DER NORMALKRAFT EINER TRANSPORTEINHEIT EINES LANGSTATORLINEARMOTORS**

METHOD FOR CONTROLLING THE NORMAL FORCE OF A TRANSPORT UNIT OF A LINEAR MOTOR WITH GUIDEWAY STATOR

PROCÉDÉ DE RÉGLAGE DE LA FORCE NORMALE D'UNE UNITÉ DE TRANSPORT D'UN MOTEUR LINÉAIRE À STATOR LONGS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.03.2017  AT 502262017**

(43) Veröffentlichungstag der Anmeldung:
**10.10.2018  Patentblatt 2018/41**

(60) Teilanmeldung:
**21204266.7 / 3 978 300**
**22166907.0 / 4 049 886**

(73) Patentinhaber: **B&R Industrial Automation GmbH**
**5142 Eggelsberg (AT)**

(72) Erfinder:
• **Weber, Andreas**
  **5020 Salzburg (AT)**
• **Spanlang, Franz**
  **4020 Linz (AT)**

(74) Vertreter: **Patentanwälte Pinter & Weiss OG**
**Prinz-Eugen-Straße 70**
**1040 Wien (AT)**

(56) Entgegenhaltungen:
EP-A1- 2 634 913  EP-A1- 3 109 998
DE-A1- 10 241 471

## Beschreibung

Die gegenständliche Erfindung betrifft ein Verfahren zum Regeln einer auf eine Transporteinheit einer Transporteinrichtung in Form eines Langstatorlinearmotors wirkenden Normalkraft an einem Streckenabschnitt einer durch die Transporteinrichtung vorgegebenen Transportstrecke an dem nur an einer Seite der Transporteinheit Antriebsspulen des Langstatorlinearmotors vorgesehen sind und die Transporteinheit an dieser Seite durch Führungselemente an der Transportstrecke gehalten wird, wobei in dem Streckenabschnitt auf die Transporteinheit eine externe

Kraft in Normalrichtung wirkt und eine Anzahl von Antriebsmagneten an der Transporteinheit mit einer Anzahl von Antriebsspulen zur Erzeugung der Normalkraft zusammenwirkt und die Normalkraft mit einem Regler zur Regelung der Normalkraft geregelt wird.

Bei einem Langstatorlinearmotor ist eine Vielzahl von elektrischen Antriebsspulen, die den Stator bilden, nebeneinander entlang einer Transportstrecke ortsfest angeordnet. Auf einer Transporteinheit ist eine Anzahl von Antriebsmagneten, entweder als Permanentmagnete oder als elektrische Spule oder Kurzschlusswicklung, angeordnet, die mit den Antriebsspulen zusammenwirken. Durch das Zusammenwirken der (elektro)magnetischen Felder der Antriebsmagnete und der Antriebsspulen wirkt eine Vortriebskraft auf die Transporteinheit, die die Transporteinheit vorwärtsbewegt. Der Langstatorlinearmotor kann als Synchronmaschine, sowohl selbsterregt oder fremderregt, oder als Asynchronmaschine ausgeführt sein. Durch Ansteuerung der einzelnen Antriebsspulen, zur Regelung des magnetischen Flusses, wird die Größe der Vortriebskraft beeinflusst und die Transporteinheit kann in gewünschter Weise entlang der Transportstrecke bewegt werden. Dabei ist es auch möglich, entlang der Transportstrecke eine Vielzahl von Transporteinheiten anzuordnen, deren Bewegungen einzeln und unabhängig voneinander kontrolliert werden können, indem die jeweils mit einer Transporteinheit zusammenwirkenden Antriebsspulen bestromt werden, in der Regel durch Anlegen einer elektrischen Spannung. Ein Langstatorlinearmotor zeichnet sich insbesondere durch eine bessere und flexiblere Ausnützung über den gesamten Arbeitsbereich der Bewegung (Position, Geschwindigkeit, Beschleunigung), eine individuelle Regelung/Steuerung der Transporteinheiten entlang der Transportstrecke, eine verbesserte Energieausnützung, die Reduktion der Wartungskosten aufgrund der geringeren Anzahl an Verschleißteilen, einen einfachen Austausch der Transporteinheiten, effizientes Monitoring und Fehlerdetektion und eine Optimierung des Produktstromes entlang der Transportstrecke aus. Beispiele solcher Langstatorlinearmotoren können der WO 2013/143783 A1, der US 6,876,107 B2, der US 2013/0074724 A1 oder der WO 2004/103792 A1 entnommen werden.

Durch den von den Antriebsspulen erzeugten magnetischen Fluss kann neben der Vortriebskraft in Bewegungsrichtung der Transporteinheit grundsätzlich auch eine Normalkraft quer zur Bewegungsrichtung erzeugt werden. Hierzu können - analog zu rotativen Elektromotoren - den wirkenden Antriebsspulen ein elektrischer Strom mit einer Stromkomponente in Bewegungsrichtung (oftmals auch q-Komponente bezeichnet) und einer Stromkomponente in Normalrichtung (also quer zur Bewegungsrichtung, oftmals auch d-Komponente bezeichnet) aufgeprägt werden. Die Stromkomponente in Bewegungsrichtung ist dabei verantwortlich für die Erzeugung der Vortriebskraft. Das ist beispielsweise in Khong, P.C., et al., "Magnetic Guidance of the Mover in a Long-Primary Linear Motor", IEEE Transactions on Industry Applications, Vol.47, No.3, May/June 2011, S.1319-1327 beschreiben. In Khong wird ein Langstatorlinearmotor mit in Bewegungsrichtung gesehenen, beidseitig angeordneten Antriebsspulen beschrieben und die Normalkräfte an den beiden Seiten werden genutzt, um die Transporteinheit zur Führung in der Mitte zu zentrieren. Der Regelung der Normalkräfte wird dazu eine laterale Sollabweichung der Transporteinheit von der Mitte von Null vorgegeben.

Die gezielte Erzeugung einer Normalkraft wird bei einem Langstatorlinearmotor mit einseitig angeordneten Antriebsspulen im normalen Betrieb aber vermieden, da eine d-Komponente des Antriebstromes keine Vortriebskraft bewirkt und daher einen Verlust darstellt bzw. die erzielbare Vortriebskraft bei einem gegebenen Aufbau reduziert. Bei einem derartigen Aufbau des Langstatorlinearmotors wäre eine Normalkraft daher nachteilig. Bei einem Langstatorlinearmotor mit nur einseitig angeordneten Antriebsspulen wird daher versucht nur eine q-Komponente des Antriebsstromes einzuprägen.

Die DE 1 963 505 A1 beschreibt einen linearen Induktionsmotor der im Bereich einer Weiche die Normalkraft nutzt, um eine Transporteinheit an der Weiche entweder entlang dem einen oder dem anderen Streckenabschnitt weiterzubewegen. Auch im Bereich der Weiche sind zu beiden Seiten Antriebsspulen vorgesehen, um die Transporteinheit an der Gabelung der Weiche entsprechend führen zu können. Dabei wird die Normalkraft an der Weiche an einer Seite reduziert oder gänzlich eliminiert, wodurch sich eine resultierende transversale Magnetkraft ergibt. Hier wird die Normalkraft also gezielt im Bereich der Weiche erzeugt bzw. beeinflusst, um die Transporteinheit an der Weiche zu steuern. Entlang der anderen Streckenabschnitte, an denen wieder nur einseitig angeordnete Antriebsspulen vorgesehen sind, wird man aber aus den oben genannten Gründen wieder bestrebt sein, eine Normalkraft zu vermeiden. Ähnliches kann auch der EP 3 109 998 A1 entnommen werden.

Eine Transporteinheit muss aber natürlich auch sicher an der Transportstrecke gehalten werden, damit diese während der Bewegung entlang der Transportstrecke nicht herunterfällt. Das gilt insbesondere an Streckenabschnitten, an denen nur eine einseitige Transportstrecke (an der auch die Antriebsspulen angeordnet sind) vorgesehen ist. Denkbar sind hier aufwendige mechanische Führungen, um ein sicheres Halten sicherzustellen. Nachteilig ist dabei, dass solche mechanischen Führungen für den schlimmsten Betriebszustand (Beladung, Geschwindigkeit, Beschleunigung, Lage der Transporteinheit, etc.) ausgelegt sein müssen. Damit ist die Führung und Halterung aufwendig und in den meisten Fällen überdimensioniert. Bei einfacheren Ausführungen der Führung der Transporteinheit an der Transportstrecke wird in der Regel eine Haltekraft in Normalrichtung benötigt, um die Transporteinheit sicher an der Transportstrecke zu halten.

Durch die wirkenden Führungskräfte an den Führungen entstehen auch Laufgeräusche und die Transporteinheiten können auch unruhig laufen, was wiederum zu Schwingungen und Vibrationen führen kann. Insbesondere Laufgeräusche machen sich sehr unangenehm bemerkbar, vor allem wenn man an große Installationen mit vielen Transporteinheiten denkt.

Die Antriebsmagnete der Transporteinheit wirken mit den Eisenteilen des Stators des Langstatorlinearmotors oder der Führungskonstruktion der Transportstrecke zusammen und erzeugen eine Magnetkraft in Normalrichtung. Diese Magnetkraft kann als Unterstützung der Haltekraft angesehen werden, reicht aber in vielen Fällen alleine nicht aus, um die Transporteinheit in allen Betriebszuständen sicher an der Transportstrecke zu halten. Daher müssen auch zusätzliche Einrichtungen zum Führen und Halten der Transporteinheit vorgesehen sein. Das können zusätzliche, nicht dem Antrieb dienende Permanentmagnete sein oder wiederum zusätzliche mechanische Führungen bzw. Halterungen. Beides macht die Transporteinheit aber wieder aufwendiger. Ist die Magnetkraft hingegen zu groß, kann diese durch die entstehende hohe Normalkraft die Transporteinheit und/oder die Transportstrecke durch hohe Reibungskräfte mechanisch belasten, was zu erhöhtem Verschleiß führen kann.

Das grundsätzliche Problem ist jedoch, dass die Führung der Transporteinheit an einem Streckenabschnitt mit nur einseitig angeordneten Antriebsmagneten immer auf den schlimmsten Betriebszustand ausgelegt werden muss, um die Transporteinheit immer sicher an der Transportstrecke halten zu können. Das bedingt hohe Kräfte zur Führung der Transporteinheit, die die Transporteinheit und/oder die Transportstrecke durch hohe Reibungskräfte mechanisch belasten, was zu erhöhtem Verschleiß und unangenehmen Vibrationen und Laufgeräuschen führen kann.

Es ist eine Aufgabe der gegenständlichen Erfindung ein Verfahren zum Steuern einer Transporteinheit anzugeben, mit dem es möglich ist, die mechanische Belastung durch die Führung der Transporteinheit zu reduzieren und trotzdem in allen Betriebszuständen eine sichere Halterung der Transporteinheit an der Transportstrecke sicherzustellen.

Diese Aufgabe wird erfindungsgemäß dadurch gelöst, indem der Regler eine normalkraftbildende Stromkomponente des Antriebstromes der mit der Transporteinheit zusammenwirkenden Antriebsspulen ermittelt, sodass eine auf die Transporteinheit wirkende resultierende Normalkraft als Summe der Normalkraft, einer von den Antriebsmagneten hervorgerufenen Magnetkraft in Normalrichtung und einer auf die Transporteinheit wirkenden externen Kraft in Normalrichtung zumindest einer vorgegebenen Haltekraft in Normalrichtung entspricht, wobei die vorgebebene Haltekraft die Kraft in Normalrichtung ist, die benötigt wird, um die Transporteinheit in jeder Situation sicher an der Transportstrecke zu halten. Durch die Regelung der Normalkraft (worunter auch eine einfache Steuerung verstanden wird) kann die auf die Transporteinheit wirkende resultierende Normalkraft beeinflusst werden, sodass die auf die Transporteinheit wirkende resultierende Kraft in Normalkraft betraglich gesehen nie größer als erforderlich und auch nie kleiner als notwendig wird. Damit kann die mechanische Belastung auf die Führungselemente der Transporteinheit reduziert werden und es lassen sich auch Laufgeräusche reduzieren und die Laufruhe der Transporteinheit erhöhen.

Sehr einfach lässt sich das durch eine Feedforward Regelung erreichen, indem der Regler zur Regelung der Normalkraft die normalkraftbildende Stromkomponente des Antriebstromes aus einem bekannten funktionellen Zusammenhang zwischen der normalkraftbildenden Stromkomponente des Antriebstromes und einer Sollgröße der Regelung der Normalkraft ermittelt. Dazu kann beispielsweise als Sollgröße der Regelung der Normalkraft ein Sollfluss vorgegeben werden und die normalkraftbildende Stromkomponente als Quotient des Sollflusses und einer bekannten Induktivität in Normalrichtung berechnet werden, was sehr einfach implementiert werden kann.

Die Regelgüte kann hingegen erhöht werden, wenn im Regler zur Regelung der Normalkraft mittels eines Normalkraftreglers aus der Differenz einer Sollgröße der Regelung der Normalkraft und einer Istgröße der Regelung der Normalkraft die normalkraftbildende Stromkomponente ermittelt wird.

Vorteilhafterweise wird im Regler zur Regelung der Normalkraft anhand einer Vorsteuerung anhand einer Sollgröße der Regelung der Normalkraft ein Vorsteuerstrom und mittels eines Normalkraftreglers aus der Differenz der Sollgröße der Regelung der Normalkraft und einer Istgröße der Regelung der Normalkraft ein Reglerstrom ermittelt und die normalkraftbildenden Stromkomponente als Summe des Vorsteuerstromes und des Reglerstromes ermittelt. Damit lassen sich auch unvermeidliche Normalkraftschwankungen wirkungsvoll ausregeln, womit die Laufruhe noch weiter erhöht werden kann. Hierbei ist es vorteilhaft, wenn der Vorsteuerstrom anhand eines bekannten Zusammenhanges der Position der Transporteinheit relativ zur Transportstrecke ermittelt wird, da dieser Zusammenhang einfach ermittelbar ist.

Die Regelung der Normalkraft kann auf einfache Weise in eine Regelung der Bewegung der Transporteinheit eingebunden werden, indem in einem Regler zur Regelung der Vorwärtskraft der Transporteinheit eine vorwärtskraftbildende Stromkomponente ermittelt wird und ein Antriebsstrom der mit der Transporteinheit zusammenwirkenden Antriebsspulen als vektorielle Summe aus der vorwärtskraftbildenden Stromkomponente und der normalkraftbildenden Stromkomponente ermittelt wird und der Antriebsstrom in Spulenspannungen umgerechnet werden, die an die mit der Transporteinheit zusammenwirkenden Antriebsspulen angelegt werden.

Die gegenständliche Erfindung wird nachfolgend unter Bezugnahme auf die Figuren 1 bis 14 näher erläutert, die beispielhaft, schematisch und nicht einschränkend vorteilhafte Ausgestaltungen der Erfindung zeigen. Dabei zeigt

Fig.1 ein Ausgestaltung einer Transporteinrichtung in Form eines Langstatorlinearmotors,
Fig.2 eine Detailansicht des Aufbaus der Transportsegmente und der Transporteinheit,
Fig.3 einen Querschnitt in Normalrichtung an einer Stelle der Transportstrecke,
Fig.4 eine Darstellung der auf eine Transporteinheit wirkenden Kräfte in Normalrichtung,
Fig.5 eine Darstellung der auf eine Transporteinheit wirkenden Kräfte in Normalrichtung an verschiedenen Stellen der Transportstrecke,
Fig.6 bis 9 Ausführungen einer Regelungen zur Bewegung der Transporteinheit,
Fig.10 eine erfindungsgemäße Erweiterung der Regelungen der Bewegung der Transporteinheit mit einem Regler zur Regelung der Normalkraft,
Fig.11 eine erfindungsgemäße Ausführung des Reglers zur Regelung der Normalkraft,
Fig.12 eine weitere erfindungsgemäße Ausführung des Reglers zur Regelung der Normalkraft,
Fig.13 ein beispielhafter Verlauf des magnetischen Flusses in Abhängigkeit von der Position relativ zur Transportstrecke und
Fig.14 eine weitere Ausführung des Reglers zur Regelung der Normalkraft mit Vorsteuerung.

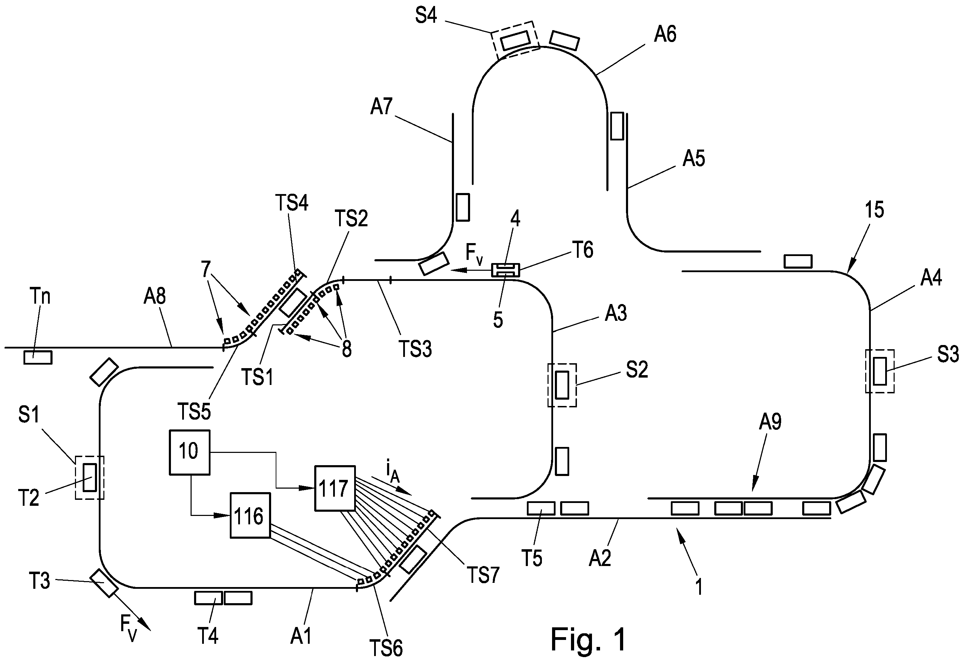

In Fig.1 ist eine Transporteinrichtung 1 in Form eines Langstatorlinearmotors beispielhaft dargestellt. Die Transporteinrichtung 1 besteht aus einer Anzahl von Transportsegmenten TSk (k ist hierbei ein Index, der für alle vorhandenen Transportsegmente TS1, TS2, TS3, ... steht), von denen aus Gründen der Übersichtlichkeit beispielhaft nur die Transportsegmente TS1 ... TS7 bezeichnet sind. Ein Transportsegment TSk ist jeweils an einer Seite der Transportstrecke angeordnet. Die Transportsegmente TSk bilden verschiedene Streckenabschnitte aus, beispielsweise eine Gerade, Kurven mit unterschiedlichen Winkeln und Radien, Weichen, usw., und können sehr flexibel zusammengesetzt werden, um die Transportstrecke der Transporteinrichtung 1 auszubilden. Die Transportsegmente TSk zusammen bilden damit die Transportstrecke, entlang der die Transporteinheiten Tn (n ist hierbei ein Index, der für alle vorhandenen Transporteinheiten T1, T2, T3, T4, ... steht) bewegt werden können. Dieser modulare Aufbau ermöglicht eine sehr flexible Gestaltung der Transporteinrichtung 1. Die Transportsegmente TSk sind dabei natürlich an einer nicht dargestellten ortsfesten Stützkonstruktion angeordnet.

Entlang der Transportstrecke der Transporteinrichtung 1, die im Wesentlichen durch die Längsrichtung der Transportsegmente TSk gegeben ist, können auch eine Anzahl von Arbeitsstationen S1 ... S4 angeordnet sein, in denen eine Manipulation an den mit den Transporteinheit Tn transportierten Komponenten stattfindet. Die Arbeitsstation S1 kann beispielsweise als Einschleuse- und/oder Ausschleusestation ausgeführt sein, in der fertig bearbeitete Komponenten entnommen werden und zu bearbeitende Komponenten an eine Transporteinheit Tn übergeben werden. In den Arbeitsstationen S2 ... S4 können an den Komponenten irgendwelche Bearbeitungsschritte vorgenommen werden. Dabei können die Transporteinheiten Tn in einer Arbeitsstationen S1 ...S4 zur Bearbeitung auch gestoppt werden, z.B. in einer Füllstation, in der leere Flaschen befüllt werden, oder durchbewegt werden, z.B. in einer Temperierstation in der Komponenten temperaturbehandelt werden, gegebenenfalls auch mit einer anderen Geschwindigkeit als zwischen den Arbeitsstationen S1 ... S4.

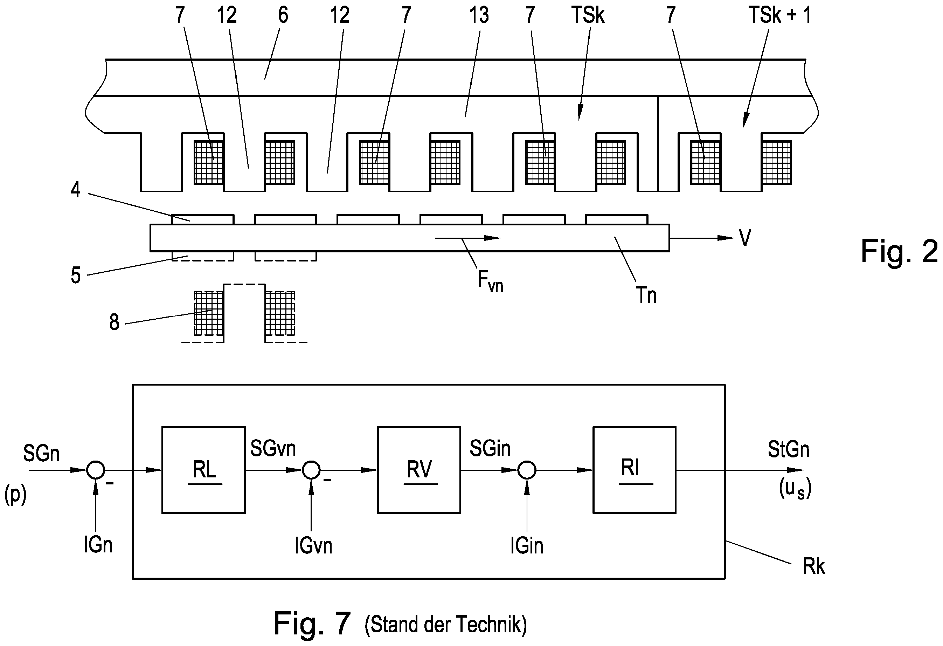

Die Transporteinrichtung 1 ist als Langstatorlinearmotor ausgeführt, bei denen die Transportsegmente TSk in an sich bekannter Weise jeweils einen Teil eines Langstators des Langstatorlinearmotors ausbilden. Entlang der Transportsegmente TSk sind daher in Längsrichtung in bekannter Weise eine Vielzahl von den Stator ausbildenden, ortsfest angeordnete elektrischen Antriebsspulen 7, 8 angeordnet (in Fig.1 aus Gründen der Übersichtlichkeit nur für die Transportsegmente TS1, TS2, TS4, TS5, TS6, TS7 angedeutet), die mit Antriebsmagneten 4, 5 an den Transporteinheiten T1 ... Tn (in Fig.1 aus Gründen der Übersichtlichkeit nur für die Transporteinheit T6 angedeutet) zusammenwirken können. Das ist beispielhaft in der Fig.2 im Detail dargestellt. Ein Antriebsmagnet 4, 5 kann als Elektromagnet (Erregungsspulen) und/oder als Permanentmagnet ausgeführt sein. Die Antriebsspulen 7, 8 sind vorzugsweise auf Zähnen 12 eines ferromagnetischen Kerns 13 (beispielsweise ein Eisen Blechpaket) angeordnet. Die Antriebsspulen 7, 8 können aber natürlich auch kernlos ausgeführt sein. Aufgrund dieser Anordnung ist auch unmittelbar ersichtlich, dass der magnetische Fluss aufgrund des sich ändernden magnetischen Widerstandes und aufgrund der Anordnung der Antriebsmagnet 4, 5 in Längsrichtung entlang des Transportsegments TSk abhängig von der Position der Transporteinheit Tn variiert.

Es kann entlang der Transportstrecke auch Streckenabschnitte geben, an denen beidseitig Transportsegmente TSk angeordnet sind, zwischen denen eine Transporteinheit Tn bewegt wird (beispielsweise die Transportsegmente TS1, TS4). Wenn die Transporteinheit Tn an beiden Seiten (in Bewegungsrichtung gesehen) mit Antriebsmagneten 4, 5 ausgestattet ist, dann kann die Transporteinheit Tn auch gleichzeitig mit den beidseitig angeordneten Transportsegmenten TSk zusammenwirken. Damit kann natürlich in Summe auch eine größere Vortriebskraft $F_{Vn}$ erzeugt werden. Für die Erfindung werden aber Streckenabschnitte betrachtet, an denen nur an einer Seite ein Transportsegmente TSk bzw. Antriebsmagnete 7, 8 vorgesehen sind, beispielsweise am Transportsegment TS5.

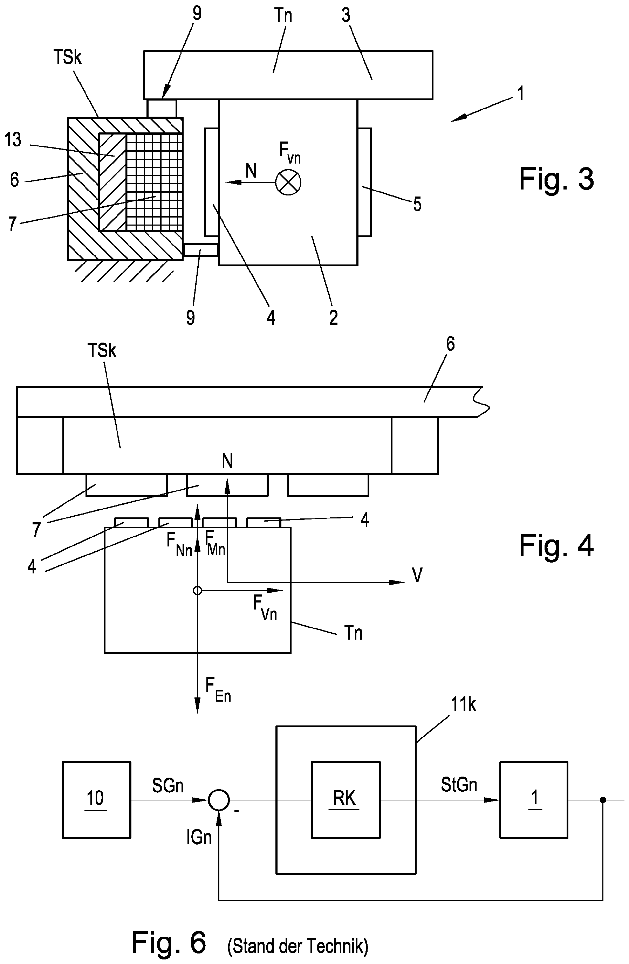

Fig.3 zeigt einen Querschnitt (quer zur Längsrichtung) durch einen solchen Streckenabschnitt mit einem Transportsegment TSk an einer Seite der Transportstrecke und einer darauf bewegten Transporteinheit Tn. Für die Erfindung ist es aber irrelevant, an welcher Seite ein Transportsegment TSk bzw. Antriebsspulen 7, 8 angeordnet sind. Eine Transporteinheit Tn besteht hier aus einem Grundkörper 2 und einer daran angeordneten Komponentenaufnahme 3, wobei die Komponentenaufnahme 3 grundsätzlich an einer beliebigen Stelle des Grundkörpers 2 angeordnet sein kann, insbesondere auch an der Unterseite für hängende Komponenten. Am Grundkörper 2 ist an der dem Transportsegment TSk zugewandten Seite der Transporteinheit Tn die Anzahl der Antriebsmagnete 4 des Langstatorlinearmotors angeordnet. Wie in Fig.3 angedeutet, kann aber auch an der gegenüberliegenden Seite eine Anzahl von Antriebsmagneten 5 angeordnet sein. Das Transportsegment TSk ist an einer stationären Stützkonstruktion 6 angeordnet oder bildet selbst einen Teil der stationären Stützkonstruktion 6. Am Transportsegment TSk, oder allgemeiner an der Transportstrecke, die durch die Transportsegmente TSk gebildet wird, sind die Antriebsspulen 7, 8 des Langstatorlinearmotors angeordnet. Die Transporteinheit Tn ist so ausgeführt, dass die Antriebsmagnete 4 gegenüber den Antriebsspulen 7 angeordnet sind, sodass die Antriebsmagnete 4 mit den Antriebsspulen 7 zur Erzeugung einer Vortriebskraft $F_{vn}$ zusammenwirken können. Damit ist die Transporteinheit Tn entlang der Transportstrecke in Vorwärtsrichtung V bewegbar. An der Transporteinheit Tn sind natürlich auch noch (hier aus Gründen der Übersichtlichkeit nur angedeutete) Führungselemente 9, wie Rollen, Räder, Gleitflächen, Führungsmagnete, etc., vorgesehen sein, um die Transporteinheit Tn entlang der Transportstrecke zu führen und zu halten, insbesondere auch im Stillstand. Die Führungselemente 9 der Transporteinheit Tn wirken dabei zur Führung mit der Transportstrecke, z.B. der stationären Stützkonstruktion 6 oder den Transportsegmenten TSk zusammen, z.B. in dem sich die Führungselemente 9 an der Transportstrecke abstützen, einhaken, daran abgleiten oder abrollen, etc. Zwischen den Antriebsspulen 7 und den Antriebsmagneten 4 ist ein Luftspalt ausgebildet, der unter anderem durch die Führungselemente 9 eingestellt und aufrechterhalten wird.

Die Antriebsmagnete 4, 5 können ebenso als, eventuell zusätzliche, Führungselemente 9 dienen, um die Transporteinheit Tn an der Transportstrecke zu halten. Die Antriebsmagnete 4 bewirken beispielsweise eine magnetische Anziehungskraft auf die ferromagnetischen Teile der Führungskonstruktion 6 und/oder Antriebsspulen 7 (beispielsweise eines Eisenkerns). Diese Magnetkraft $F_{Mn}$ versucht die Transporteinheit Tn in Richtung zur Transportstrecke zu ziehen und bewirkt damit eine Haltekraft in Normalrichtung N, die bei Bewegung der Transporteinheiten Tn auch eine Haltefunktion erfüllt. Im Falle einer beidseitigen Anordnung der Antriebsmagnete 4, 5 und Antriebsspulen 7, 8 können sich die dabei entstehenden magnetischen Anziehungskräfte an beiden Seiten der Transporteinheit Tn natürlich aufheben.

Die Führungselemente 9 einer Transporteinheit Tn sorgen in Zusammenwirken mit der Transportstrecke 15 dazu, dass die Transporteinheit Tn an der Transportstrecke 15 gehalten wird. Im Betrieb der Transporteinrichtung 1 muss jede Transporteinheit Tn an jeder Stelle der Transportstrecke 15, zu jedem Zeitpunkt und in jedem Betriebszustand sicher an der Transportstrecke 15 gehalten werden. Je nach konstruktiver Ausführung der Transporteinheit Tn und der Transportstrecke 15, insbesondere der Führungselemente 9, wird eine minimale Haltekraft in Normalrichtung N notwendig sein, um ein Herunterfallen der Transporteinheit Tn von der Transportstrecke zu verhindern. Vorzugsweise sind die Führungselemente 9 und/oder die damit zusammenwirkenden Bauteile der Führungskonstruktion 6 einfach ausgeführt und dienen dazu, den Luftspalt aufrecht zu erhalten und die wirkenden Normalkräfte aufzunehmen, sowie dazu eine Transporteinheit Tn zumindest in Ruhezustand zu halten und ein Herunterfallen der Transporteinheit Tn von der Transportstrecke zu verhindern. In der Regel, aber nicht notwendigerweise, wird diese Haltekraft die Transporteinheit Tn zur Transportstrecke 15 ziehen. "Einfach ausgeführt" bedeutet hierbei insbesondere auch, dass durch diese Führungselemente 9 keine großen Kräfte erzeugt werden, die die mechanischen Komponenten der Transportstrecke und/oder der Transporteinheiten Tn belasten, beispielsweise durch entstehende Reibung, Belastungen auf Lager, Führungen, etc, oder zu hohen Laufgeräuschen führen.

Wenn die Transporteinheit Tn bewegt wird, kann aber eine zusätzliche externe Kraft $F_{En}$ in Normalrichtung N auf die Transporteinheit Tn wirken. Eine externe Kraft $F_{En}$ in Normalrichtung N kann beispielsweise in Abhängigkeit von der Position der Transporteinheit Tn an der Transportstrecke (z.B. Steigung oder Neigung der Transportstrecke, Kurve, usw.) und/oder in Abhängigkeit vom aktuellen Betriebszustand der Transporteinheit Tn (z.B. Geschwindigkeit, Beschleunigung, Beladungszustand, usw.) auftreten. Beispielsweise wird die externe Kraft durch Beschleunigungskräfte oder Fliehkräfte in Kurven hervorgerufen. Diese durch die Bewegung der Transporteinheit Tn hervorgerufenen Kräfte können natürlich auch von der Masse der Transporteinheit Tn, und damit insbesondere auch von der Beladung der Transporteinheit Tn, beeinflusst werden. Fährt die Transporteinheit Tn beispielsweise mit hoher Beladung und hoher Geschwindigkeit in eine Kurve wirken hohe Fliehkräfte als externe Kraft $F_{En}$, die dazu führen können, dass die Transporteinheiten Tn trotz der Führungselemente 9 von der Transportstrecke fällt, was natürlich im laufenden Betrieb unbedingt zu vermeiden ist. Ein anderes Beispiel für das Auftreten von externen Kräften $F_{En}$ ist eine Transporteinheit Tn die beispielsweise eine Flüssigkeit in einem Behälter transportiert. Bei Bewegung, insbesondere bei Beschleunigung, der Transporteinheit Tn kann die Flüssigkeit im Behälter schwanken, wobei durchaus beträchtliche externe Kräfte $F_{En}$ auf die Transporteinheit Tn entstehen können. Auch unsymmetrische Beladungen der Transporteinheit Tn können bei Bewegung externe Kräfte $F_{En}$ auf die Transporteinheit Tn bewirken. Die gewünschten einfachen Führungselemente 9 reichen aufgrund der wirkenden externen Kräfte $F_{En}$ möglicherweise nicht mehr aus, um die Transporteinheit Tn an allen Stellen der Transportstrecke 15 sicher an der Transportstrecke zu halten.

Andererseits kann, wie bereits erwähnt, auf die Transporteinheit Tn in Normalrichtung N auch eine Magnetkraft $F_{Mn}$ wirken, die von den Antriebsmagneten 4 in Zusammenwirken mit den ferromagnetischen Teilen der Antriebsspulen 7 und/oder der Transportsegmente TSk und/oder der Stützkonstruktion 6 hervorgerufen wird. Diese Magnetkraft $F_{Mn}$ zieht die Transporteinheit Tn in der Regel zur Transportstrecke 15.

Auf die Transporteinheit Tn wirkt damit eine resultierende Normalkraft $F_{\Sigma Nn}$ als Summe aller Kräfte (vorzeichenrichtig) in Normalrichtung N. Je nach Richtung der resultierenden Normalkraft $F_{\Sigma Nn}$ (zur Transportstrecke 15 hingerichtet oder von dieser weggerichtet), kann die resultierende Normalkraft $F_{\Sigma Nn}$ versuchen, die Transporteinheit Tn von der Transportstrecke 15 abzuheben oder zur Transportstrecke 15 zu ziehen. Im Falle einer von der Transportstrecke 15 weggerichteten resultierenden Normalkraft $F_{\Sigma Nn}$ könnte die Transporteinheit Tn z.B. von der Transportstrecke 15 herunterfallen, was natürlich auf jeden Fall zu vermeiden ist. Diese resultierende Normalkraft $F_{\Sigma Nn}$ muss aber auf jeden Fall von den Führungselemente 9 aufgenommen werden. Die Führungselemente 9 und/oder die damit zusammenwirkenden Teile der Transportstrecke 15 wurden daher bisher so ausgeführt, dass die Transporteinheit Tn immer sicher an der Transportstrecke 15 gehalten werden kann, womit die Führungselemente 9 in den meisten Fällen stark überdimensioniert waren. Dadurch wurden die Führungselemente 9 und/oder die damit zusammenwirkenden Teil aber auch stark belastet (beispielsweise durch Reibung), da entsprechende Kräfte in Normalrichtung N wirken mussten.

Um die Führungselemente 9 einfach halten zu können, die Belastungen auf die Führungselemente 9 nieder halten zu können und trotzdem die Transporteinheit Tn in jeder Situation sicher an der Transportstrecke 15 halten zu können ist nun erfindungsgemäß vorgesehen, die durch die Antriebsspule 7, 8 hervorgerufene Normalkraft $F_{Nn}$ so zu regeln, sodass die auf die Transporteinheit Tn wirkende, resultierende Normalkraft $F_{\Sigma Nn}$ einer vorgegebenen benötigten minimalen Haltekraft $F_{Nnmin}$ entspricht. Damit lassen sich zu hohe resultierende Normalkräfte $F_{\Sigma Nn}$ zur Transportstrecke 15 hin oder von dieser weg ausgleichen.

Das wird mit Bezugnahme auf die Fig.4 erläutert. Auf die Transporteinheit Tn wirkt die Vortriebskraft $F_{Vn}$, um diese in Vorwärtsrichtung V zu bewegen. Zusätzlich wirkt gegebenenfalls in Normalrichtung N eine Magnetkraft $F_{Mn}$, die von den Antriebsmagneten 4 in Zusammenwirken mit den ferromagnetischen Teilen der Antriebsspulen 7 und/oder der Transportsegmente TSk und/oder der Stützkonstruktion 6 hervorgerufen wird. Auf die Transporteinheit Tn kann in Abhängigkeit von der Position oder vom Betriebszustand der Transporteinheit Tn eine externe Kraft $F_{En}$ wirken. Durch Bestromen der mit der Transporteinheit Tn zusammenwirkenden Antriebsspulen 7 mit einer d-Komponente $i_{Ad}$ des Antriebsstromes $i_A$, wirkt zusätzlich eine Normalkraft $F_{Nn}$ auf die Transporteinheit Tn. Damit wirkt auf die Transporteinheit Tn eine resultierende Normalkraft $F_{\Sigma Nn}$ als Summe aller in Normalrichtung N wirkenden Kräfte, also $F_{\Sigma Nn}=\Sigma(F_{Nn}, F_{Mn}, F_{En})$, wobei die Kräfte natürlich vorzeichenrichtig anzusetzen sind. Diese resultierende Normalkraft $F_{\Sigma Nn}$ soll im Betrag und Richtung zumindest einer vorgegebenen Haltekraft $F_{Hnmin}$ entsprechen, also $F_{\Sigma Nn}\geq F_{Hnmin}$. Die vorgebebene Haltekraft $F_{Hnmin}$ ist dabei die Kraft in Normalrichtung N, die benötigt wird, um die Transporteinheit Tn sicher an der Transportstrecke zu halten. Nachdem der konstruktive Aufbau der Transportstrecke, der Transporteinheit Tn und der Führungselemente 9 bekannt ist, kann man die benötigte Haltekraft $F_{Hnmin}$ als bekannt und gegeben voraussetzen.

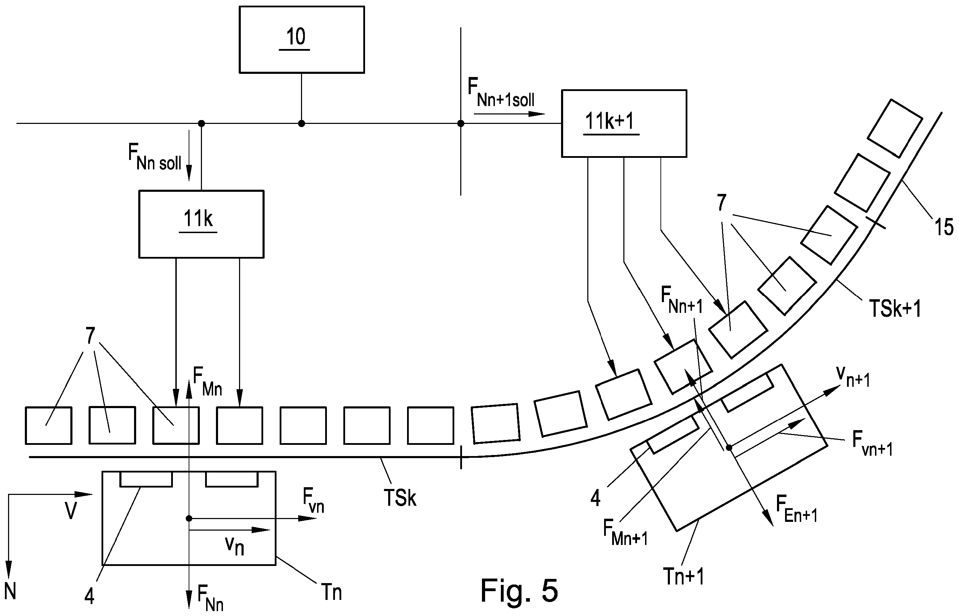

Damit ist es möglich über die Normalkraft $F_{Nn}$ die auf die Transporteinheit Tn wirkende resultierende Normalkraft $F_{\Sigma Nn}$ gezielt zu beeinflussen. In einer Kurve kann die Normalkraft $F_{Nn}$ beispielsweise entgegen der Richtung der wirkenden Fliehkraft als externe Kraft $F_{En}$ erzeugt werden, um die Wirkung der Fliehkräfte abzuschwächen oder gar zu kompensieren. Die Wirkung einer schwankenden Flüssigkeit kann bei Planung der Transportstrecke 15 (wo ja auch die Art der Beladung und die Bewegung vorab geplant wird) abgeschätzt werden und an kritischen Stellen (z.B. an Stellen wo Beschleunigungen wirken oder wirken können) kann die benötigte Normalkraft $F_{Nn}$ zum Abschwächen oder Kompensieren der externen Kraft $F_{En}$ erzeugt werden. Entlang einer geraden Strecke, oder wenn keine externen Kräfte $F_{En}$ wirken, kann die wirkende Magnetkraft $F_{Mn}$ durch die Normalkraft $F_{Nn}$ teilweise aufgehoben werden, um die Belastung auf die Führungselemente 9 durch eine verringerte resultierende Normalkraft $F_{\Sigma Nn}$ zu verringern. Damit kann die mechanische Belastung auf die Führungselemente 9 und/oder auf die Transportstrecke reduziert werden, was sich auch positiv auf die Lebensdauer der Transporteinheit Tn oder auf die Wartungsintervalle auswirkt. Außerdem können damit auch Laufgeräusche und Vibrationen der Transporteinheit Tn reduziert werden. Dieser ganz besonders vorteilhafte Anwendungsfall zur gezielten Entlastung der Führungselemente 9 wird beispielsweise mit Bezugnahme auf die Fig. 5 erläutert.

Entlang einer Transportstrecke 15, die im gezeigten Ausführungsbeispiel aus zwei Transportsegmenten TSk, TSk+1 besteht, werden zwei Transporteinheiten Tn, Tn+1 bewegt. Das erste Transportsegment TSk ist ein gerader Streckenabschnitt. In diesem Streckenabschnitt befindet sich die Transporteinheit Tn, die hier mit konstanter Geschwindigkeit $v_n$ in Bewegungsrichtung V (Längsrichtung der Transportstrecke) bewegt wird. Die Transporteinheit Tn wird durch nicht dargestellte Führungselemente 9 an der Transportstrecke 15, also am Transportsegment TSk, gehalten. Auf die Transporteinheit Tn wirkt eine Magnetkraft $F_{Mn}$, die durch die Antriebsmagnete 4 an der Transporteinheit Tn in Zusammenwirken mit der Transportstrecke 15 erzeugt wird (beispielsweise eine permanentmagnetische Anziehungskraft). In diesem geraden Streckenabschnitt wirkt beispielsweise keine externe Kraft $F_{En}$ in Normalrichtung N. Damit kann in diesem Streckenabschnitt eine Normalkraft $F_{Nn}$ erzeugt werden, die die Magnetkraft $F_{Mn}$ zur Entlastung der Führungselemente 9 und Verringerung der Laufgeräusche reduziert. Die Normalkraft $F_{Nn}$ wird dabei so eingestellt, dass die resultierende Normalkraft $F_{\Sigma Nn}$ (Summe der Normalkraft $F_{Nn}$ und der Magnetkraft $F_{Mn}$) zumindest der vorgegebenen, benötigten Haltekraft $F_{Hnmin}$ entspricht.

Das folgende Transportsegment TSk+1 ist als Kurve ausgebildet. Wenn eine Transporteinheit Tn+1 mit einer Geschwindigkeit $v_{n+1}$ durch die Kurve fährt, wirkt auf die Transporteinheit Tn+1 als externe Kraft $F_{En+1}$ eine Fliehkraft, die versucht, die Transporteinheit Tn+1 vom Transportsegment TSk+1 abzuheben. Die Normalkraft $F_{Nn+1}$ kann hier nun genutzt werden, um die Wirkung der Fliehkraft abzuschwächen und um damit eine wirkende resultierende Normalkraft $F_{\Sigma Nn}$ (Summe der Normalkraft $F_{Nn+1}$, der Magnetkraft $F_{Mn+1}$ und der externen Kraft $F_{En+1}$) sicherzustellen, die zumindest der vorgebebenen Haltekraft $F_{Hn+1min}$ entspricht. Falls die Fliehkraft nicht zu hoch ist, könnte die Normalkraft $F_{Nn+1}$ auch genutzt werden, um eine zu hohe resultierende Normalkraft $F_{\Sigma Nn+1}$ in Richtung zur Transportstrecke 15 weiter abzuschwächen, solange die vorgebebenen Haltekraft $F_{Hn+1min}$ nicht unterschritten wird. Auch in diesem Fall werden die Führungselemente 9 entlastet und Laufgeräusche verringert.

In bekannter Weise wird durch Regelung oder Steuerung des elektrischen Statorstromes $i_A$ der Antriebsspulen 7, 8 für jede der Transporteinheiten Tn eine Vortriebskraft $F_{vn}$ erzeugt, die die Transporteinheiten Tn in Vorwärtsrichtung V entlang der Transportsegmente TSk, also entlang der Transportstrecke 15, bewegt. Dabei ist es natürlich nur notwendig, die Antriebsspulen 7, 8 zu bestromen die gerade mit einer Transporteinheiten Tn, insbesondere deren Antriebsmagneten 4, 5, zusammenwirken. Die erzeugten Vortriebskräfte $F_{vn}$ müssen dabei für die einzelnen Transporteinheiten Tn natürlich nicht gleich sein. Auch die in die jeweiligen Antriebsspulen 7, 8 eingeprägten Statorströme $i_A$ müssen natürlich nicht gleich groß sein. Jede der Transporteinheiten Tn kann damit individuell (Position, Geschwindigkeit, Beschleunigung) und unabhängig (bis auf die Vermeidung von möglichen Kollisionen) von den anderen Transporteinheiten Tn entlang der Transportstrecke 15 bewegt werden. Nachdem dieses grundlegende Prinzip eines Langstatorlinearmotors hinreichend bekannt ist, wird hier nicht näher darauf eingegangen.

Ein Transportsegment TSk, bzw. die darauf angeordneten Antriebsspulen 7 können zu diesem Zweck von einer Segmentregelungseinheit 11k geregelt werden, wie beispielsweise in Fig.5 beschrieben. Eine Transporteinheit Tn, die sich in einem Transportsegment TSk befindet, wird daher von der zugehörigen Segmentregelungseinheit 11k geregelt. Im Wesentlichen bedeutet das, dass die Segmentregelungseinheit 11k die Antriebsspulen 7 des zugehörigen Transportsegments TSk so regelt, dass die darauf befindliche Transporteinheit Tn durch die Vortriebskraft $F_{Vn}$ in der gewünschten Weise (Position, Geschwindigkeit, Beschleunigung) entlang des Transportsegments TSk bewegt wird. Dabei ist es natürlich möglich, dass auch mehrere Transporteinheiten gleichzeitig entlang eines Transportsegmentes TSk bewegt werden können. Bewegt sich eine Transporteinheit Tn von einem Transportsegment TSk in das nächstfolgende Transportsegment TSk+1, wird auch die Regelung der Transporteinheit Tn in geordneter Weise auf die Segmentregelungseinheit 11k+1 des nächstfolgenden Transportsegments TSk+1 übergeben. Die Bewegung der Transporteinheit Tn durch die Transporteinrichtung 1 kann in einer übergeordneten Anlagenregelungseinheit 10, die mit den Segmentregelungseinheiten 11k verbunden ist, überwacht und gesteuert werden. Die Anlagenregelungseinheit 10 steuert beispielsweise durch Positionsvorgaben (Sollwerte der Regelung) die Bewegung der einzelnen Transporteinheiten Tn durch die Transporteinrichtung 1. Hierzu wird natürlich auch die aktuelle Position der Transporteinheit Tn auf geeigneter und in bekannter Weise erfasst und der Anlagenregelungseinheit 10 und/oder der Segmentregelungseinheit 11k übergeben.

Die Transportstrecke 15 muss aber natürlich nicht durch einzelne Transportsegmente TSk ausgebildet werden, sondern es kann auch ein durchgehender Aufbau realisiert sein. Ebenso könnte auch nur eine einzige Segmentregelungseinheit 11k vorgesehen sein, die alle Antriebsspulen 7 regelt. Die Segmentregelungseinheiten 11k könnten auch in der Anlagenregelungseinheit 10 integriert sein.

Für die Bewegung der Transporteinheit Tn müssen aber nicht gleichzeitig beidseitig angeordnete Antriebsspulen 7, 8 (falls vorhanden) durch Einprägen eines Statorstromes $i_A$ bestromt werden. Es reicht grundsätzlich aus, wenn die auf die Transporteinheit Tn zur Bewegung wirkende Vortriebskraft $F_{Vn}$ nur mittels der Antriebsspulen 7 oder 8 einer Seite und den Antriebsmagneten 4 oder 5 auf der zugehörigen Seite der Transporteinheit Tn erzeugt wird. An Streckenabschnitten der Transportstrecke, an denen eine große Vortriebskraft $F_{Vn}$ benötigt wird, z.B. im Falle einer Steigung, einer schweren Last oder in Bereichen der Beschleunigung der Transporteinheit Tn, können die Antriebsspulen 7, 8 zu beiden Seiten (falls vorhanden) bestromt werden (z.B. Transportabschnitt A9 in Fig.1), womit die Vortriebskraft $F_{Vn}$ vergrößert werden kann. Ebenso ist es denkbar, dass in gewissen Transportabschnitten der Transportstrecke die Führungskonstruktion 6 nur einseitig ausgeführt ist, oder dass in gewissen Transportabschnitten die Führungskonstruktion 6 zwar zweiseitig ausgeführt ist, aber nur einseitig mit Antriebsspulen 7, 8 bestückt ist. Das ist auch in Fig.1 angedeutet, wo Streckenabschnitte mit beidseitiger Führungskonstruktion 6 und Streckenabschnitte mit nur einseitiger Führungskonstruktion 6 angedeutet sind.

Die Regelung einer Transporteinheit Tn eines Langstatorlinearmotors in Vorwärtsrichtung V ist hinlänglich bekannt und wird mit Bezugnahme auf die Fig.6 kurz erläutert. Von einer Anlagenregelungseinheit 10 wird in jedem Zeitschritt der Regelung, z.B. alle 1ms, eine Sollgröße SGn, beispielsweise eine Sollposition $p_{soll}$ und/oder eine Sollgeschwindigkeit $v_{soll}$, für die Transporteinheit Tn vorgegeben. Eine aktuelle Istgröße IGn, beispielsweise eine Istposition $p_{ist}$ und/oder eine Istgeschwindigkeit $v_{ist}$, der Transporteinheit Tn wird ermittelt. Die Istgröße IGn kann mittels geeigneter Sensoren gemessen werden, kann aus anderen bekannten Größen berechnet werden, beispielsweise anhand eines Modells der Bewegung der Transporteinheit Tn, oder kann in einem Beobachter geschätzt werden. Die Differenz aus der Sollgröße SGn und der Istgröße IGn wird einem Regler Rk in der entsprechenden Segmentregelungseinheit 11k zugeführt, der daraus anhand des implementierten Regelgesetzes (z.B. ein PI-Regler oder ein PID-Regler) eine Stellgröße StGn, beispielsweise eine an den wirkenden Antriebsspulen 7, 8 anzulegende Spulenspannung us zum Bestromen der Antriebsspulen 7, 8, berechnet, die an der Regelstrecke, hier die Transporteinrichtung 1 eingestellt wird. Werden mehrere Transporteinheiten Tn gleichzeitig durch ein Transportsegment TSk bewegt, so können auch mehrere Regler Rk, einer pro Transporteinheit Tn, z.B. in der zugehörigen Segmentregelungseinheit 11k, unabhängig voneinander aktiv sein.

Der Regler Rk ist oftmals, aber nicht notwendigerweise, als Reglerkaskade ausgeführt, wie mit Bezugnahme auf die Fig.7 mit einer Position p als Sollgröße SGn erläutert wird. Die Differenz aus Sollgröße SGn und Istgröße IGn (Istposition) wird einem Lageregler RL zugeführt, der eine einzustellende Geschwindigkeit $v_n$ der Transporteinheit Tn als Sollgröße SGvn für einen Geschwindigkeitsregler RV berechnet. Die Differenz dieser Sollgröße SGvn und einer Istgröße IGvn (hier eine Istgeschwindigkeit) wird dem Geschwindigkeitsregler RV zugeführt, der eine benötigte vortriebskraftbildende Stromkomponente $i_{Anq}$ des Statorstromes $i_A$ als Sollgröße SGin für einen Stromregler RI berechnet. Die Differenz aus der Sollgröße SGin und einer Istgröße IGin (hier z.B. ein Iststrom) wird dem Stromregler RI zugeführt, der eine Spulenspannung us als Stellgröße StGn berechnet.

Die für die Bewegung der Transporteinheit Tn benötigte Vortriebskraft $F_{vn}$ wird bekanntermaßen von der vortriebskraftbildenden Stromkomponente $i_{Anq}$ (q-Komponente) des Statorstromes $i_{An}$ gebildet. Die nicht der Vorwärtsbewegung dienende Normalkraft $F_{Nn}$ wird von einer normalkraftbildenden Stromkompente $i_{And}$ (d-Komponente) des Statorstromes $i_{An}$ gebildet. Der Statorstrom $i_{An}$ ist daher ein Stromvektor mit einer q- und einer d-Komponente, wobei die d-Komponente bisher üblicherweise auf Null gesetzt wurde oder nur für eine Weichenauslösung verwendet wurde, wie z.B. in der eingangs genannten EP 3 109 998 A1 beschreiben. Der Statorstrom $i_{An}$ entspricht dem vektorieller Summenstrom aller Spulenströme is der auf die Transporteinheit Tn wirkenden Antriebsspulen 7 (oder 8) einer Seite.

Für die normale Vorwärtsbewegung der Transporteinheit Tn reicht somit die Vortriebskraftbildende Stromkomponente $i_{Anq}$ aus. In einem Elektromotor, somit auch in einem Langstatorlinearmotor, wirken natürlich gleichzeitig mehrere Antriebsspulen 7, 8 zur Bewegung der Transporteinheit Tn. Unter der Voraussetzung, dass keine d-Komponenten vorhanden ist, entspricht die vortriebskraftbildende Stromkomponente $i_{Anq}$ dem vektorieller Summenstrom aller Spulenströme is der auf die Transporteinheit Tn wirkenden Antriebsspulen 7 (oder 8) einer Seite. Die im Regler Rk berechnete vortriebskraftbildende Stromkomponente $i_{Anq}$ muss daher noch auf die tatsächlich wirkenden Antriebsspulen 7 aufgeteilt werden. Hierbei weiß man aufgrund der bekannten Position der Transporteinheit Tn und des bekannten Aufbaus der Transportstrecke zu jedem Zeitpunkt welche Antriebsspulen 7 mit der Transporteinheit Tn zusammenwirken.

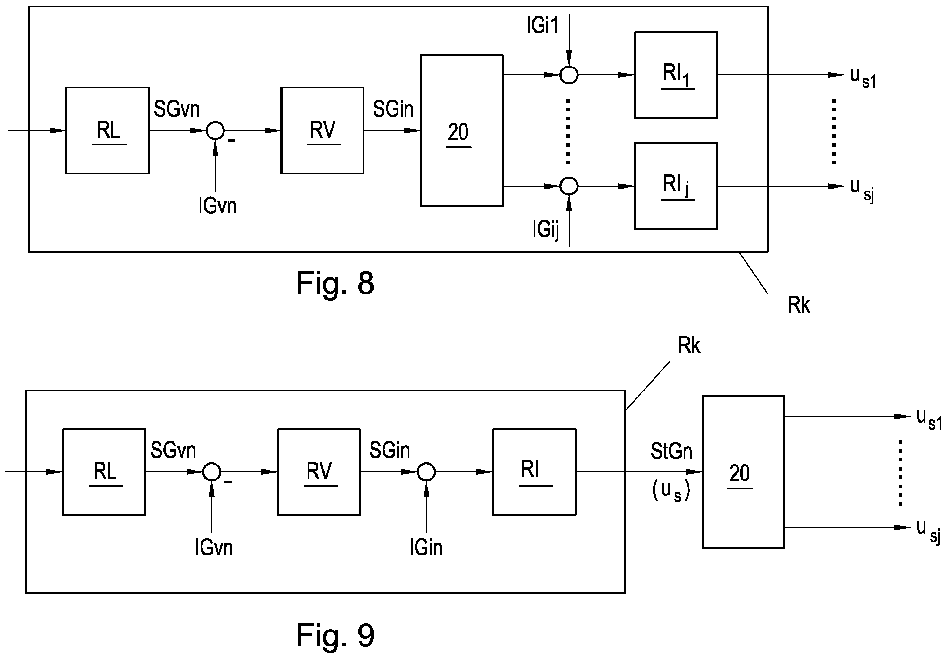

Beispielsweise kann die vom Geschwindigkeitsregler RV berechnete Sollgröße SGin (also ein Strom) für den Stromregler RI in einer Umsetzeinheit 20 auf die wirkenden j Antriebsspulen 7 aufgeteilt werden (z.B. mittels der analog angewendeten inversen Park Transformation), wie in Fig.8 dargestellt. Die aufgeteilten Sollgrößen SGin werden dann j einzelnen Stromreglern RI für jede der wirkenden Antriebsspulen 7 zugeführt, die dann die an den einzelnen Antriebsspulen 7 anzulegenden j Spulenspannungen usj berechnen. Alternativ kann aber auch erst die vom Stromregler RI berechnete Stellgröße StGn (die Spulenspannung us) aufgeteilt werden, wie in Fig.9 gezeigt. Die Umsetzeinheit 20 kann hierbei auch getrennt vom Regler Rk sein.

Die einzelnen Spulenspannungen usj der wirkenden j Antriebsspulen 7 (oder 8) können dann durch die Antriebsspulenelektronik (nicht dargestellt) an den Antriebsspulen 7 angelegt werden.

Die Regelung einer Transporteinheit Tn wird nun erfindungsgemäß erweitert, indem nicht nur die vortriebskraftbildende Stromkomponente $i_{Anq}$ geregelt wird, wie bisher, sondern auch die normalkraftbildende Stromkomponente $i_{And}$ des Statorstromes $i_A$. Das Ziel dabei ist, die auf die Transporteinheit Tn wirkende resultierende Normalkraft $F_{\Sigma Nn}$ (quer zur Vortriebskraft $F_{Vn}$) im laufenden Betrieb der Transporteinrichtung 1 wie oben beschrieben und unabhängig von der Vortriebskraft $F_{Vn}$ zu regeln. Die Regelung der Normalkraft $F_{Nn}$ ist an sich nur an Streckenabschnitten interessant, an denen nur an einer Seite (in Vorwärtsrichtung V gesehen) der Transportstrecke 15 Antriebsspulen 7 (oder 8) angeordnet sind (z.B. A4 in Fig.1). An Streckenabschnitten mit beidseitig angeordneten Antriebsspulen (z.B. A9 in Fig.1) heben sich die wirkenden Normalkräfte zum Teil auf (insbesondere die Magnetkräfte $F_{Mn}$) und die resultierende Normalkraft kann auch von Führungselementen 9 auf beiden Seiten aufgenommen werden, wodurch sich auch die mechanischen Belastungen halbieren. Außerdem kann eine Transporteinheit Tn an einem solchen Abschnitt auch nicht von der Transportstrecke 15 fallen.

Für die Regelung der Normalkraft $F_{Nn}$ ist es erforderlich, die an einer bestimmten Position der Transportstrecke 15 auf die Transporteinheit Tn wirkenden Kräfte in Normalrichtung N zu kennen. Die externe Kraft $F_{En}$ kann beispielsweise mittels geeigneter Sensoren ermittelt werden. Durch einen Beschleunigungssensor an der Transporteinheit Tn könnte beispielsweise eine Beschleunigung in Normalrichtung N erfasst werden, woraus eine dynamische Kraft als Produkt der bekannten Masse der Transporteinheit Tn (inklusive Beladung) mit der Beschleunigung in Normalrichtung N als externe Kraft $F_{En}$ berechnet werden kann. Es kann aber auch ein Modell hinterlegt sein, um die externe Kraft $F_{En}$ in Abhängigkeit von bekannten Größen zu berechnen. Ein Modell könnte beispielsweise aus einem bekannten Krümmungsradius der Transportstrecke 15 (z.B. einer Kurve), der Geschwindigkeit in Vorwärtsrichtung V und der Masse der Transporteinheit Tn (inklusive Beladung die ebenfalls als bekannt angenommen werden können) eine Fliehkraft als externe Kraft $F_{En}$ ermitteln. Die externe Kraft $F_{En}$ kann aber beispielsweise auch bei der Planung der Transporteinrichtung 1 konfiguriert werden, also an bestimmten Positionen der Transportstrecke 15 kann eine bestimmte auftretende externe Kraft $F_{En}$ angenommen, berechnet, simuliert, usw. werden und zu dieser Position gespeichert werden. Bei der Planung der Transporteinrichtung 1 wird normalerweise auch die Bewegung der Transporteinheiten Tn geplant, womit die an gewissen Streckenabschnitten auftretenden externe Kräfte $F_{En}$ abgeschätzt werden können und für die Regelung der Normalkraft $F_{Nn}$ hinterlegt werden können.

Die wirkende Magnetkraft $F_{Mn}$ kann ebenfalls als bekannt angenommen werden. Nachdem der Aufbau der Transporteinrichtung 1 bekannt ist, kann die Magnetkraft $F_{Mn}$ beispielsweise gemessen, simuliert oder berechnet werden.

Die vorgebebene benötigte Haltekraft $F_{Hnmin}$ oder gleichwertig eine einzustellende resultierende Soll-Normalkraft $F_{\Sigma Nnsoll}$ kann als Sollwert der Regelung herangezogen werden und die Normalkraft $F_{Nn}$ kann durch einen Regler Rk eingestellt werden, um zu jedem Zeitpunkt oder an jeder Position der Transportstrecke 15 sicherzustellen, dass die resultierende Normalkraft $F_{\Sigma Nn}$ der vorgebebenen Haltekraft $F_{Hnmin}$ entspricht, oder diese zumindest nicht unterschreitet. In diesem Fall müssten dem Regler Rk auch die Magnetkraft $F_{Mn}$ und gegebenenfalls auch die externe Kraft $F_{En}$ bekannt sein, die dem Regler Rk entweder zugeführt werden oder im Regler Rk ermittelt werden. Äquivalent dazu kann dem Regler Rk als Sollwert auch eine Soll-Normalkraft $F_{Nnsoll}$ vorgegeben werden, die einzustellen ist, um die vorgebebene Haltekraft $F_{Hnmin}$ zu erreichen. In diesem Fall werden die Magnetkraft $F_{Mn}$ und gegebenenfalls die externe Kraft $F_{En}$ in einer übergeordneten Einheit, beispielsweise in der Anlagenregelungseinheit 10 oder einer Segmentregelungseinheit 11k, berücksichtigt. Im einfachsten Fall kann auch anhand von Erfahrung (beispielsweise aufgrund von Versuchen) eine Soll-Normalkraft $F_{Nnsoll}$ vorgegeben werden, die ausreicht, um zumindest in einem Streckenabschnitt sicherzustellen, dass die vorgebebene Haltekraft $F_{Hnmin}$ eingehalten wird. Dabei müsste nicht einmal die die Magnetkraft $F_{Mn}$ und gegebenenfalls die externe Kraft $F_{En}$ bekannt sein, da direkt auf die Soll-Normalkraft $F_{Nnsoll}$ geregelt werden kann. Der Regler Rk kann beispielsweise in einer Segmentregelungseinheit 11k integriert sein, wovon im Nachfolgenden ohne Einschränkung der Allgemeinheit ausgegangen wird. Ferner wird im Nachfolgenden davon ausgegangen, dass der Regler Rk eine Soll-Normalkraft $F_{Nnsoll}$ als Sollwert erhält.

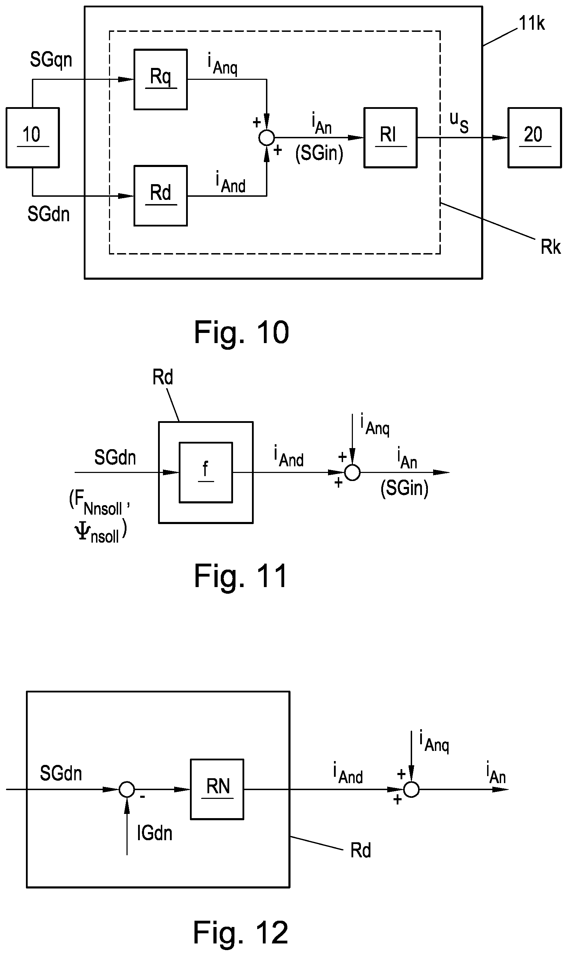

Der Regler Rk zur Regelung der Transporteinheit Tn wird nun aufgeteilt in einen Regler Rq zur Regelung der Vortriebskraft $F_{Vn}$ und einen Regler Rd zur Regelung der Normalkraft $F_{Nn}$, wie in Fig.10 dargestellt. Der Regler Rq entspricht dabei einem herkömmlichen Regler der Vortriebskraft Fvn, beispielsweise wie oben mit Bezugnahme auf Fig.6 bis 9 beschrieben. Die konkrete Implementierung des Reglers Rq spielt für die erfindungsgemäße Regelung der Normalkraft $F_{Nn}$ aber keine Rolle. Von einer übergeordneten Einheit, beispielsweise der Anlagenregelungseinheit 10, wird wie bisher ein Sollwert SGqn für die Regelung der Vortriebskraft $F_{Vn}$ mit dem Regler Rq und zusätzlich ein Sollwert SGdn für die Regelung der Normalkraft $F_{Nn}$ mit dem Regler Rd vorgegeben. Der Sollgröße SGdn für die Regelung der Normalkraft $F_{Nn}$ ist vorzugsweise eine Soll-Normalkraft $F_{Nnsoll}$ oder äquivalent dazu ein magnetischer Sollfluss $\psi_{nsoll}$ im Luftspalt. Die dabei berechnete Vortriebskraftbildende Stromkomponente $i_{Anq}$ und normalkraftbildende Stromkomponente $i_{And}$ werden gemeinsam als Stromvektor des Statorstromes $i_{An}$ an den Stromregler RI übergeben, der wiederum die anzulegenden Spulenspannungen usj berechnet. Wie oben beschreiben kann die Umsetzeinheit 20 vor oder nach dem Stromregler RI vorgesehen sein.

Im einfachsten Fall kann der bekannte Zusammenhang f zwischen der Soll-Normalkraft $F_{Nn-soll}$ oder äquivalent dazu dem magnetischen Sollfluss $\psi_{nsoll}$ und der normalkraftbildenden Stromkomponente $i_{And}$ herangezogen werden, um die Normalkraft $F_{Nn}$ für eine Transporteinheit Tn in einer Art Feedforward-Steuerung zu steuern, wie in Fig.11 dargestellt. Ebenso könnte direkt ein Sollwert für die normalkraftbildenden Stromkomponente $i_{Andsoll}$ vorgegeben werden. In diesem Fall wäre der funktionale Zusammenhang f durch die Einheitsfunktion gegeben. Aufgrund des vorgegebenen und bekannten Aufbaus der Transporteinrichtung 1 kann vorab der Zusammenhang f zwischen der Normalkraft $F_{Nn}$ (oder dem Fluss $\psi$) und der normalkraftbildenden Stromkomponente $i_{And}$ ermittelt werden (beispielsweise berechnet, simuliert oder gemessen) und kann als bekannt vorausgesetzt werden. Dieser Zusammenhang f ist im Regler Rd implementiert, beispielsweise als mathematische Funktion oder Modell. Ein einfacher Zusammenhang mit der bekannten Induktivität $L_{Sd}$ in Normalrichtung N kann beispielsweise in der Form

$$i_{And} = \frac{\Psi_{nsoll}}{L_{Sd}}$$

angeschrieben werden.

Anstelle einer einfachen Feedforward Steuerung kann auch ein Feedback Normalkraftregler RN (beispielsweise ein einfacher PI oder PID-Regler) implementiert sein, der aus dem vorgegebenen Sollwert SGdn (Soll-Normalkraft $F_{Nnsoll}$ oder magnetischer Sollfluss $\psi_{nsoll}$ oder auch eine resultierende Soll-Normalkraft $F_{\Sigma Nnsoll}$) für die Regelung der Normalkraft $F_{Nn}$ die benötigte normalkraftbildende Stromkomponente $i_{And}$ berechnet, wie in Fig.12 dargestellt. Die hierfür benötigte Istgröße IGdn, beispielsweise ein aktueller im Luftspalt wirkender magnetischer Fluss $\psi$, kann gemessen werden oder in einem Beobachter aus anderen Messgrößen (wie beispielsweise dem aktuellen Spulenstrom und der aktuellen Spulenspannung) geschätzt werden.

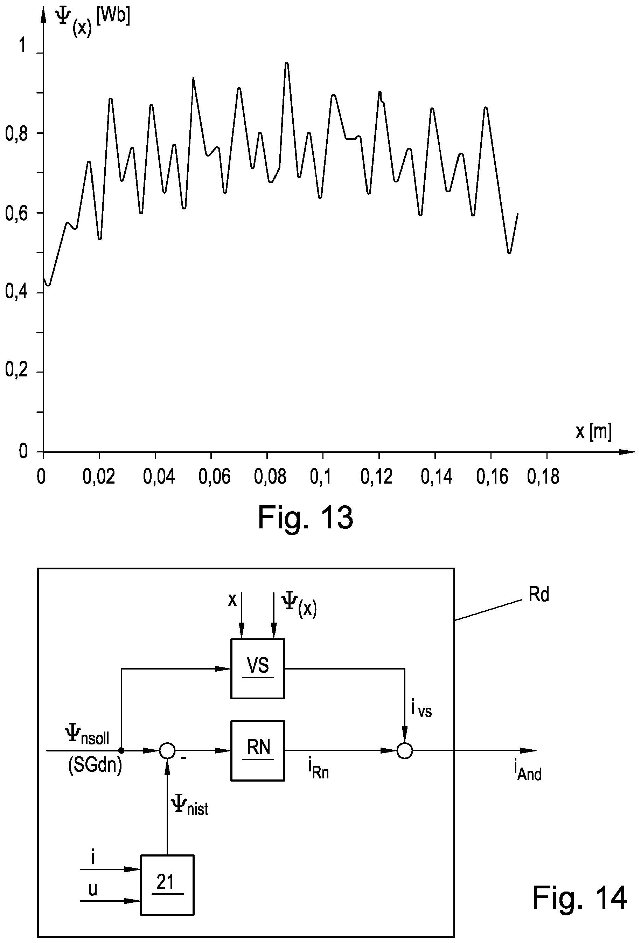

Aufgrund des bekannten Aufbaus der Transportstrecke und der Transporteinheit Tn kann der aufgrund der Antriebsmagnete 4 wirkende magnetische Fluss $\psi_x$ als Funktion der Position x der Transporteinheit Tn relativ zur Transportstrecke 15 (siehe Fig. 2) über die Länge der Transporteinheit Tn (bzw. über die Länge der Antriebsmagnete 4, 5) vorab ermittelt werden. Beispielsweise kann dieser Verlauf des magnetischen Flusses $\psi_x$ vorab gemessen werden (z.B. durch Messen der Induktionsspannung (EMK Spannung) und Integration derselben), simuliert werden (z.B. in einer FEM Simulation oder durch ein Reluktanznetzwerk) oder kann auch durch einen Flussbeobachter geschätzt werden. Ein beispielhafter Verlauf des magnetischen Flusses $\psi_x$ ist in Fig.13 dargestellt.

Dieser Verlauf kann gespeichert werden, beispielsweise im Regler Rk oder in der Segmentregelungseinheit 11k, und kann im Regler Rd genutzt werden, um damit eine Vorsteuerung für den Normalkraftregler RN zu implementieren. Es kann beispielsweise ein einfaches Vorsteuergesetz in der Form

$$i_{VS}(x) = \frac{\Psi_{nsoll} - \Psi(x)}{L_{Sd}}$$

implementiert werden, mit dem vorgegebenen Sollfluss $\psi_{nsoll}$, dem Flussverlauf $\psi(x)$ als Funktion der Position x der Transporteinheit Tn (der aus dem Verlauf wie in Fig.13 entnommen werden kann) und der bekannten Induktivität $L_{Sd}$ in d-Richtung. Natürlich könnte auch ein anderes geeignetes Vorsteuergesetz realisiert werden, auch ohne dem Verlauf wie in Fig.13. Der Regler Rd mit Vorsteuerung VS könnte dann wie in Fig.14 dargestellt implementiert werden.

Dabei wird der magnetische Sollfluss $\psi_{nsoll}$ als Sollgröße SGdn vorgegeben. Der magnetische Sollfluss $\psi_{nsoll}$ wird der Vorsteuerung VS zugeführt, die daraus einen Vorsteuerstrom ivs, beispielsweise wie oben dargestellt, berechnet. Der Istfluss $\psi_{nist}$, als Istgröße IGdn, wird in diesem Ausführungsbeispiel in einem Beobachter 21 geschätzt. Die Regeldifferenz aus magnetischem Sollfluss $\psi_{nsoll}$ und dem Istfluss $\psi_{nist}$ wird dem Normalkraftregler RN zugeführt, der über den Regelstrom $i_{RN}$ nur mehr kleine Regelabweichungen ausregeln muss.

Wenn in der Vorsteuerung VS der Verlauf des magnetischen Flusses in Abhängigkeit von der Position berücksichtigt wird, dann wird durch die Vorsteuerung diese Flussschwankung ausgeglichen. Damit können auch damit in Zusammenhang stehende Normalkraftschwankungen auf einfache Weise ausgeglichen werden, was die Laufruhe der Transporteinheit Tn noch weitere erhöhen kann.

**Patentansprüche**

1. Verfahren zum Regeln einer auf eine Transporteinheit (Tn) einer Transporteinrichtung (1) in Form eines Langstatorlinearmotors wirkenden Normalkraft an einem Streckenabschnitt einer durch die Transporteinrichtung (1) vorgegebenen Transportstrecke (15) an dem nur an einer Seite der Transporteinheit (Tn) Antriebsspulen (7, 8) des Langstatorlinearmotors vorgesehen sind und die Transporteinheit (Tn) an dieser Seite durch Führungselemente (9) an der Transportstrecke (15) gehalten wird, wobei eine Anzahl von Antriebsmagneten (4, 5) an der Transporteinheit (Tn) mit einer Anzahl von Antriebsspulen (7, 8) zur Erzeugung der Normalkraft ($F_{Nn}$) zusammenwirkt und die Normalkraft ($F_{Nn}$) mit einem Regler (Rk) zur Regelung der Normalkraft ($F_{Nn}$) geregelt wird, **dadurch gekennzeichnet, dass** in dem Streckenabschnitt auf die Transporteinheit (Tn) eine externe Kraft (FEn) in Normalrichtung (N) wirkt, und der Regler (Rk) eine normalkraftbildende Stromkomponente ($i_{And}$) des Antriebstromes ($i_{An}$) der mit der Transporteinheit (Tn) zusammenwirkenden Antriebsspulen (7, 8) ermittelt, sodass eine auf die Transporteinheit (Tn) wirkende resultierende Normalkraft ($F_{\Sigma Nn}$) als Summe der Normalkraft ($F_{Nn}$), einer von den Antriebsmagneten (4, 5) hervorgerufenen Magnetkraft ($F_{Mn}$) in Normalrichtung (N) und der auf die Transporteinheit (Tn) wirkenden externen Kraft ($F_{En}$) in Normalrichtung (N) zumindest einer vorgegebenen Haltekraft ($F_{Hnmin}$) in Normalrichtung (N) entspricht, wobei die vorgebebene Haltekraft ($F_{Hnmin}$) die Kraft in Normalrichtung (N) ist, die benötigt wird, um die Transporteinheit (Tn) in jeder Situation sicher an der Transportstrecke (15) zu halten.

2. Verfahren nach Anspruch 1, **dadurch gekennzeichnet, dass** der Regler (Rk) zur Regelung der Normalkraft ($F_{Nn}$) die normalkraftbildende Stromkomponente ($i_{And}$) des Antriebstromes ($i_{An}$) aus einem bekannten funktionellen Zusammenhang (f) zwischen der normalkraftbildenden Stromkomponente ($i_{And}$) des Antriebstromes (iA) und einer Sollgröße (SGdn) der Regelung der Normalkraft ($F_{Nn}$) ermittelt.

3. Verfahren nach Anspruch 2, **dadurch gekennzeichnet, dass** als Sollgröße (SGdn) der Regelung der Normalkraft ($F_{Nn}$) ein Sollfluss ($\psi_{nsoll}$) vorgegeben wird und die normalkraftbildende Stromkomponente ($i_{And}$) als Quotient des Sollflusses ($\psi_{nsoll}$) und einer bekannten Induktivität ($L_{Sd}$) in Normalrichtung (N) berechnet wird.

4. Verfahren nach Anspruch 1, **dadurch gekennzeichnet, dass** im Regler (Rk) zur Regelung der Normalkraft ($F_{Nn}$) mittels eines Normalkraftreglers (Rd) aus der Differenz einer Sollgröße (SGdn) der Regelung der Normalkraft ($F_{Nn}$) und einer Istgröße (IGdn) der Regelung der Normalkraft ($F_{Nn}$) die normalkraftbildende Stromkomponente ($i_{And}$) ermittelt wird.

5. Verfahren nach Anspruch 1, **dadurch gekennzeichnet, dass** im Regler (Rk) zur Regelung der Normalkraft ($F_{Nn}$) anhand einer Vorsteuerung anhand einer Sollgröße der Regelung der Normalkraft ($F_{Nn}$) ein Vorsteuerstrom (ivs) und mittels eines Normalkraftreglers (Rd) aus der Differenz der Sollgröße (SGdn) der Regelung der Normalkraft ($F_{Nn}$) und einer Istgröße (IGdn) der Regelung der Normalkraft ($F_{Nn}$) ein Reglerstrom ($i_{Rn}$) ermittelt werden und die normalkraftbildenden Stromkomponente ($i_{And}$) als Summe des Vorsteuerstromes (ivs) und des Reglerstromes ($i_{Rn}$) ermittelt wird.

6. Verfahren nach Anspruch 5, **dadurch gekennzeichnet, dass** der Vorsteuerstrom (ivs) anhand eines bekannten Zusammenhanges der Position (x) der Transporteinheit (Tn) relativ zur Transportstrecke (15) ermittelt wird.

7. Verfahren nach einem der Ansprüche 1 bis 6, **dadurch gekennzeichnet, dass** in einem Regler (Rq) zur Regelung der Vorwärtskraft (Fvn) der Transporteinheit (Tn) eine vorwärtskraftbildende Stromkomponente ($i_{Anq}$) ermittelt wird und ein Antriebsstrom ($i_{An}$) der mit der Transporteinheit (Tn) zusammenwirkenden Antriebsspulen (7, 8) als vektorielle Summe aus der vorwärtskraftbildenden Stromkomponente ($i_{Anq}$) und der normalkraftbildenden Stromkomponente ($i_{And}$) ermittelt wird und der Antriebsstrom ($i_{An}$) in Spulenspannungen (us) umgerechnet werden, die an die mit der Transporteinheit (Tn) zusammenwirkenden Antriebsspulen (7, 8) angelegt werden.

**Claims**

1. A method for controlling a normal force acting on a transport unit (Tn) of a conveyor installation (1) in the form of a long stator linear motor on a track section of a conveyor track (15) defined by the conveyor installation (1), on which track section drive coils (7, 8) of the long stator linear motor are provided on only one side of the transport unit (Tn) and the transport unit (Tn) is retained on the conveyor track (15) on this side by guide elements (9), wherein a number of drive magnets (4, 5) on the transport unit (Tn) interacts with a number of drive coils (7, 8) for generating the normal force ($F_{Nn}$) and the normal force ($F_{Nn}$) is controlled with a controller (Rk) for controlling the normal force ($F_{Nn}$), **characterized in that** an external force ($F_{En}$) in normal direction (N) acts on the transport unit (Tn) in the track section and the controller (Rk) determines a normal-force-forming current component ($i_{And}$) of the drive current ($i_{An}$) of the drive coils (7, 8) interacting with the transport unit (Tn) so that a resulting normal force ($F_{\Sigma Nn}$) acting on the transport unit (Tn) as the sum of the normal force ($F_{Nn}$), a magnetic force ($F_{Mn}$) in the normal direction (N) caused by the drive magnets (4, 5), and the external force ($F_{En}$) in the normal direction (N) acting on the transport unit (Tn) corresponds at least to a specified retaining force ($F_{Nnmin}$) in the normal direction (N), which specified retaining force ($F_{Nnmin}$) is required to retain the transport unit (Tn) safely on the conveyor track (15) in every situation.

2. The method according to claim 1, **characterized in**

**that** the controller (Rk) for controlling the normal force ($F_{Nn}$) determines the normal-force-forming current component ($i_{And}$) of the drive current ($i_{An}$) from a known functional relationship (f) between the normal-force-forming current component ($i_{And}$) of the drive current ($i_A$) and a setpoint value (SGdn) of the control of the normal force ($F_{Nn}$).

3. The method according to claim 2, **characterized in that** a setpoint flux ($\psi_{nsoll}$) is specified as the setpoint value (SGdn) of the control of the normal force ($F_{Nn}$), and the normal-force-forming current component ($i_{And}$) is calculated as the quotient of the setpoint flux ($\psi_{nsoll}$) and a known inductance ($L_{Sd}$) in the normal direction (N).

4. The method according to claim 1, **characterized in that,** in the controller (Rk) for controlling the normal force ($F_{Nn}$), the normal-force-forming current component ($i_{And}$) is determined from the difference of a setpoint value (SGdn) of the control of the normal force ($F_{Nn}$) and an actual value (IGdn) of the control of the normal force ($F_{Nn}$) by means of a normal-force controller (Rd).

5. The method according to claim 1, **characterized in that,** in the controller (Rk) for controlling the normal force (FNn) a pilot current (ivs) is determined by a pilot control from a setpoint value of the control of the normal force ($F_{Nn}$), and a control current ($i_{Rn}$) is determined by a normal-force controller (Rd) from the difference between the setpoint value (SGdn) of the control of the normal force ($F_{Nn}$) and an actual value (IGdn) of the control of the normal force ($F_{Nn}$), and the normal-force-forming current component ($i_{And}$) is determined as the sum of the pilot current (ivs) and the control current ($i_{Rn}$).

6. The method according to claim 5, **characterized in that** the pilot current (ivs) is determined based on a known relationship of the position (x) of the transport unit (Tn) relative to the conveyor track (15).

7. The method according to one of claims 1 to 6, **characterized in that** a forward-force-forming current component ($i_{Anq}$) is determined in a controller (Rq) for controlling the forward force ($F_{Vn}$) of the transport unit (Tn) and a drive current ($i_{An}$) of the drive coils (7, 8) interacting with the transport unit (Tn) is determined as the vectorial sum of the forward-force-forming current component ($i_{Anq}$) and the normal-force-forming current component ($i_{And}$) and the drive current ($i_{An}$) is converted into coil voltages (us) which are applied to the drive coils (7, 8) interacting with the transport unit (Tn).

**Revendications**

1. Procédé de régulation d'une force normale agissant sur une unité de transport (Tn) d'un dispositif de transport (1) sous la forme d'un moteur linéaire à stator long sur une section de voie d'une voie de transport (15) prédéterminée par le dispositif de transport (1) sur laquelle des bobines d'entraînement (7, 8) du moteur linéaire à stator long sont fournies uniquement sur un côté de l'unité de transport (Tn), et l'unité de transport (Tn) est maintenue sur la voie de transport (15) sur ledit côté à l'aide des éléments de guidage (9), dans lequel un nombre d'aimants d'entraînement (4, 5) coopèrent avec un nombre de bobines d'entraînement (7, 8) sur l'unité de transport (Tn) pour la génération de la force normale ($F_{Nn}$) et la force normale ($F_{Nn}$) est régulée à l'aide d'un régulateur (Rk) destiné à la régulation de la force normale ($F_{Nn}$), **caractérisé en ce qu'**une force externe (FEn) agit sur l'unité de transport (Tn) dans la section de voie dans une direction normale (N), et le régulateur (Rk) détermine une composante de courant ($i_{And}$) produisant une force normale du courant d'entraînement ($i_{An}$) des bobines d'entraînement (7, 8) coopérant avec l'unité de transport (Tn) de telle sorte qu'une force normale résultante ($F_{\Sigma Nn}$), en tant que somme de la force normale ($F_{Nn}$), d'une force magnétique ($F_{Mn}$) provoquée par les aimants d'entraînement (4, 5) dans la direction normale (N) et de la force externe ($F_{En}$) agissant sur l'unité de transport (Tn) dans la direction normale (N), agissant sur l'unité de transport (Tn), correspond à au moins une force de maintien ($F_{Hnmin}$) prédéterminée dans la direction normale (N), dans lequel la force de maintien ($F_{Hnmin}$) prédéterminée est la force dans la direction normale (N), laquelle est nécessaire pour maintenir de manière sûre l'unité de transport (Tn) sur la voie de transport (15) dans toutes les situations.

2. Procédé selon la revendication 1, **caractérisé en ce que** le régulateur (Rk) destiné à la régulation de la force normale ($F_{Nn}$) détermine la composante de courant ($i_{And}$) produisant une force normale du courant d'entraînement ($i_{An}$) à partir d'une relation fonctionnelle (f) connue entre la composante de courant ($i_{And}$) produisant une force normale du courant d'entraînement (iA) et une grandeur de consigne (SGdn) de la régulation de la force normale ($F_{Nn}$).

3. Procédé selon la revendication 2, **caractérisé en ce qu'**un flux de consigne ($\psi_{nsoll}$) est prédéterminé comme grandeur de consigne (SGdn) de la régulation de la force normale ($F_{Nn}$) et la composante de courant ($i_{And}$) produisant une force normale est calculée comme quotient du flux de consigne ($\psi_{nsoll}$) et d'une inductance ($L_{Sd}$) connue dans la direction normale (N).

**4.** Procédé selon la revendication 1, **caractérisé en ce que** dans le régulateur (Rk) destiné à la régulation de la force normale ($F_{Nn}$), la composante de courant produisant une force normale ($i_{And}$) est déterminée au moyen d'un régulateur de force normale (Rd) à partir de la différence entre une grandeur de consigne (SGdn) de la régulation de la force normale ($F_{Nn}$) et une grandeur réelle (IGdn) de la régulation de la force normale ($F_{Nn}$).

**5.** Procédé selon la revendication 1, **caractérisé en ce que,** dans le régulateur (Rk) destiné à la régulation de la force normale ($F_{Nn}$), un courant de précommande ($i_{vs}$) est déterminé en fonction d'une précommande en fonction d'une grandeur de consigne de la régulation de la force normale ($F_{Nn}$) et un courant de régulateur ($i_{Rn}$) est déterminé au moyen d'un régulateur de force normale (Rd) à partir de la différence entre la grandeur de consigne (SGdn) de la régulation de la force normale ($F_{Nn}$) et une grandeur réelle (IGdn) de la régulation de la force normale ($F_{Nn}$), et la composante de courant ($i_{And}$) produisant une force normale est déterminée comme somme du courant de précommande ($i_{vs}$) et du courant de régulateur ($i_{Rn}$).

**6.** Procédé selon la revendication 5, **caractérisé en ce que** le courant de précommande ($i_{vs}$) est déterminé en fonction d'une relation connue de la position (x) de l'unité de transport (Tn) par rapport à la voie de transport (15).

**7.** Procédé selon l'une quelconque des revendications 1 à 6, **caractérisé en ce que,** dans un régulateur (Rq) destiné à la régulation de la force vers l'avant ($F_{Vn}$) de l'unité de transport (Tn), une composante de courant ($i_{Anq}$) produisant une force vers l'avant est déterminée et un courant d'entraînement ($i_{An}$) des bobines d'entraînement (7, 8) coopérant avec l'unité de transport (Tn) est déterminé comme somme vectorielle de la composante de courant ($i_{Anq}$) produisant une force vers l'avant et de la composante de courant ($i_{And}$) produisant une force normale et le courant d'entraînement ($i_{An}$) est converti en tensions de bobine ($u_s$), lesquelles sont appliquées aux bobines d'entraînement (7, 8) coopérant avec l'unité de transport (Tn).

Fig. 1

**Fig. 2**

**Fig. 7** (Stand der Technik)

EP 3 385 110 B1

Fig. 3

Fig. 4

Fig. 6   (Stand der Technik)

Fig. 5

EP 3 385 110 B1

EP 3 385 110 B1

RL | SGvn | IGvn | RV | SGin | 20 | IGi1 | $RI_1$ | $u_{s1}$

IGij | $RI_j$ | $u_{sj}$

Rk

## Fig. 8

RL | SGvn | IGvn | RV | SGin | IGin | RI | StGn ($u_s$) | 20 | $u_{s1}$ | $u_{sj}$

Rk

## Fig. 9

## Fig. 10

## Fig. 11

## Fig. 12

Fig. 13

Fig. 14

# EP 3 385 110 B1

## IN DER BESCHREIBUNG AUFGEFÜHRTE DOKUMENTE

**In der Beschreibung aufgeführte Patentdokumente**

- WO 2013143783 A1
- US 6876107 B2
- US 20130074724 A1
- WO 2004103792 A1
- DE 1963505 A1
- EP 3109998 A1

**In der Beschreibung aufgeführte Nicht-Patentliteratur**

- **KHONG, P.C. et al.** Magnetic Guidance of the Mover in a Long-Primary Linear Motor. *IEEE Transactions on Industry Applications,* Mai 2011, vol. 47 (3), 1319-1327